# EUROPEAN PATENT APPLICATION

(11) **EP 1 469 698 A2**
(43) Date of publication of application: **20.10.2004**
(21) Application number: 04006850.4
(22) Date of filing: 22.03.2004
(51) Int. Cl.: H04Q 7/38

(54) **A method of controlling the access to a public land mobile network**

(30) Priority: 17.04.2003 US 417985
(71) Applicant: Nortel Networks Limited, St. Laurent, Quebec H4S 2A9 (CA)
(72) Inventor: Sauter, Martin, 88677 Markdorf (DE); Paul, Fritz, 88097 Eriskirch (DE); Billenkamp, Frank, 88677 Markdorf (DE); Paterour, Olivier, 78180 Montigny les Bretonneux (FR)
(74) Representative: Körner, Ekkehard, Dipl.-Ing.

(57) **Abstract**

In a public land mobile network comprising a base station and a plurality of mobile subscribers, each subscriber is assigned at least one of a plurality of access classes, and the base station broadcasts signalisation to all subscribers comprising selected access classes which are barred from access to the network upon receipt of the signalisation. The load condition of the network is checked in regular time periods, and the number of barred access classes is increased or decreased dependent on whether a load threshold value is exceeded or not. Each time period is divided in a plurality of sub-intervals in which a rotation of the selected access classes is made to evenly distribute the bar to access onto the plurality of subscribers.

## Description

### Field of the invention

The present invention relates to the field of mobile communication, and in particular to a method of controlling the access by mobile subscribers to a public land mobile network (PLMN).

### Background of the invention

PLMNs as under the GSM system are arranged in cells of limited area size and are dimensioned to serve an average number of end users at a time.

Situations may arise in which the number of end users desiring to communicate via the PLMN at a time broadly exceeds the capacity of the available traffic channel. Such situations are existent e.g. at the end of a match in a sporting arena, during states of emergency, natural and man-made disasters and events as floods, earthquakes, hurricanes and terrorist attacks.

In situations of this kind, specific services like security and medical services, fire brigades, rescue services and the like should have priority when accessing the PLMN so that it is necessary to bar at least a number of ordinary end users from the access to the PLMN. In this respect, the ETSI (European Telecommunication Standard Institute) defined a standard according to which the individual subscribers are each randomly assigned at least one of a plurality of access classes which is memorised in the SIM of the individual subscriber. The load of the network is checked at least in intervals by the base station controller and compared with a predetermined load threshold value, and broadcast messages are available on a cell by cell basis indicating the class(es) of subscribers to be barred from network access, if the network load exceeds said predetermined threshold value. The use of this facility allows the network operator to prevent overload of the network under critical conditions. Under normal operation conditions, that access control is not used.

This solution, however, does not satisfactorily fulfil operator requirements, as it negatively affects revenue and customer's satisfaction. The list of forbidden access classes is fixed, so that the same customers are always impacted. Barring the customers even makes exchange of SMSes and GPRS traffic impossible. The number of barred access classes is fixed, so that the number of barred access classes may in some situations be insufficient or in other situations be too high.

As was mentioned before, although in this specification the term network is used. Such network comprises a plurality of cells distributed on an area. The load situations are evaluated on a cell by cell basis, which means that if a specific cell is overloaded and requires intervention, a different cell may be unaffected, as its load situation is different. Thus, access to the network basically means access to the cell in which the particular subscriber is actually present.

### Object of the invention

It is the object of the invention to provide a method of controlling the access to a PLMN in which the utilisation of the PLMN in situations of overload is optimised and the impact on end users minimised.

### Summary of the invention

According to the invention, at least one of a plurality of access classes is assigned on a random basis to the individual mobile subscribers, and in a situation of a detected overload of the network, a first number of access classes is barred for a predetermined time period by respective signalisation from the base station to the mobile subscribers. The mobile subscribers whom the respective access classes have been assigned to are barred from access to the network. Upon expiry of the predetermined time period, the network load is checked again, and the number of barred access classes is adjusted, resulting in an increase or decrease of the number of barred access classes and respective mobile subscribers whom the respective access classes have been assigned to. This is dependent on whether the currently detected level of network load is above or below a predetermined threshold value.

Further, each of said predetermined time periods is partitioned into regular intervals, and at the expiry of each interval the selection of barred access classes, i.e. the composition of the set of barred access classes, is readjusted on a rotating basis so that a mobile subscriber belonging to an access class which has been barred in one of said intervals may have access to the network in the subsequent interval, whereas a mobile subscriber who was enabled to communicate in the first mentioned interval may be barred in the subsequent interval.

In summary, the size of the set of blocked access classes is variable in dependence on the severity of the overload condition, and the composition of the set of access classes blocked is changed on a rotating basis to allow access for all mobile subscribers during a time period even during an overload condition.

The control of the access to the network is affected via broadcast signalisation from the base station of the network, which signalisation may repeatedly be transmitted in short time intervals to be received by mobile subscribers which may have newly entered into the respective cell of the network or may have newly switched on the mobile station within the cell after the transmission of the last barring signalisation by the base station of that cell.

The time period within which the size of the set of barred access classes is fixed may be e.g. three minutes, whereas the time interval within said period at which the composition of the set of barred access classes is changed may be e.g. one minute.

The severity of the overload condition is evaluated by taking the result of barring a predetermined number of subscribers into consideration. Thus, in case that after expiry of the first predetermined time period the network load is still above the predetermined threshold value, although a number of access classes is already barred, the number of barred access classes is increased by a predetermined number, and in case that after expiry of another time period the network load is still above said first predetermined threshold value, the number of barred access classes is increased another time by a predetermined number.

On the other hand, the number of barred access classes may be decreased stepwise in the same manner by evaluating the network load. This is done by comparing the network load with the predetermined threshold value after expiry of each one of the predetermined time periods. The predetermined threshold value having been undershot will result in a decrease of the number of barred access channels upon the expiry of the respective 3-minutes time period within which said undershooting occurred.

According to a further embodiment of the invention, a second network load threshold value above the already mentioned (first) network load threshold value may be predetermined and fixed. When the network load exceeds said second threshold value, the barring of access channels is initialised, resulting in that a predetermined number of access classes, e.g. two classes, is prohibited from access to the channel, whereas said first threshold values is utilised in all subsequent comparison steps, so that an undershooting of said first network load threshold value results in an initialisation of the termination of the access blocking by decreasing the number of barred access classes.

The hysteresis effect provided by establishing two different congestion threshold values with which the detected network load is compared prevents a too early blocking of access channels.

As in the already existing ETSI standard, there may be special access classes assigned to specific services which cannot be barred so that a rotation of these access classes is void.

The barring of the access classes is controlled by a base station controller (BSC) performing a mobile station access class barring function on the BSC object and the base transceiver station (BTS) mobile station access class barring function on the BTS object.

The invention will now be further explained with reference to the accompanying drawings, showing a preferred but not limiting embodiment.

### Brief description of the drawings

Fig. 1 shows a graph of a cell congestion varying in time, showing the principle of the sizing of the set of barred access channels, and
Fig. 2 shows a graph of a cell congestion varying in time, showing the principle of rotation of barred access classes.

### Detailed disclosure of the embodiment

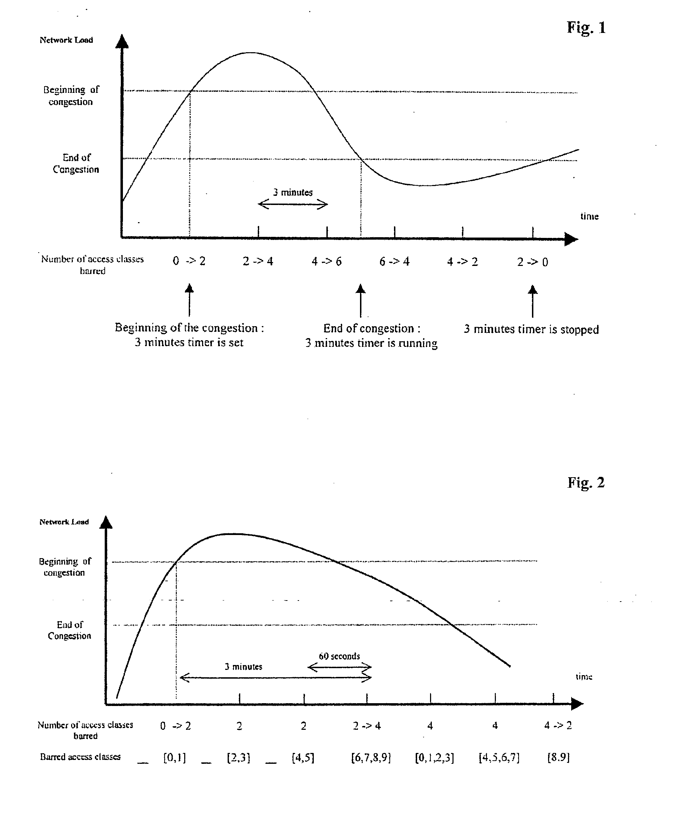

Referring to Fig. 1, the abscissa axis is showing the number of access classes barred as changing in time, whereas the ordinate axis represents the network load. Further, a first, lower network load threshold value is indicated shown by a horizontal doted line, whereas a second, upper network load threshold value is shown by another horizontal doted line. The course of network load is shown by a continuous line.

As earlier explained, "network" is to be understood as comprising a base station serving a cell and defining its extension, and a plurality of mobile subscribers existent within said cell and adapted to communicate via the base station to other subscribers. Thus, network load is the load of all circuit switched traffic channels which are available within this cell.

The drawing is showing the first important feature of the invention, according to which the number of barred access classes is varied dependent on the level of the network load and its course with time.

The traffic in the network, i.e. in the cell, is continuously monitored, at least in relatively short time intervals, and judged by the base station. At the beginning of the operation, there is some traffic in the cell, which, however is not judged as being a congestion. Then, in the shown example, traffic is increasing, first exceeding the lower (first) load threshold value, where nothing happens so far, and afterwards exceeding the higher (second) load threshold value. Once the second threshold value is exceeded by the traffic in the cell, "beginning of congestion" is determined by the BSC. Upon determination of the "beginning of congestion" the BSC broadcasts signalisation to all subscribers by which the subscribers assigned to two access classes, which are individually specified by the actual signalisation, are barred. At the same time, a 3-minutes timer is set.

At the end of the time period set by the 3-minutes timer, the BSC checks again whether congestion is still existent e.g. whether the network load level is above the lower (first) threshold value. If so, the BSC issues another signalisation to all subscribers by which in total four access classes are blocked from access to the network, said four access classes may or may not include the two access classes blocked before, as will be explained later.

After the expiry of another 3-minutes time period, the network load level is checked again by the BSC, and in the example shown in figure 1, the network load level still is above the first threshold value so that the signalisation issued by the BSC results in that now six access classes are blocked.

With continued monitoring of the network load level, after expiry of another 3-minutes time period, it is detected that the first threshold value e.g. the "end of congestion" value was undershot so that a new signalisation is issued by the BSC by which the number of barred access classes is reduced from six to four.

In the example shown in Fig. 1, the level detection at the expiry of the subsequent 3-minutes time period again reveals that the "end of congestion" level is not exceeded, so that the number of barred access classes is reduced from four to two and later on, after expiry of another 3-minutes time period, under the same condition of detection result, is reduced from two to zero. Along with the enabling of the last two access classes formerly barred, the 3-minutes timer is stopped.

Fig. 2 shows by another graph the second important feature of the invention, according to which a re-distribution of barred and unbarred access classes is made to provide satisfaction to mobile subscribers even in situations of channel congestion. The basic features of the diagram, i.e. abscissa and ordinate axis and network load threshold values, time periods and time intervals are the same as in Fig. 1. Further, the barred access classes are shown in Fig. 2 at the abscissa in square brackets.

According to Fig. 2, upon surpassing the first load threshold value, the 3-minutes timer is started and access classes 0 and 1 are barred. Upon expiry of the first time interval of one minute within the 3-minutes time period, access classes 0 and 1 are unblocked, but access classes 2 and 3 are blocked. At the end of another 1-minute time interval, access classes 2 and 3 are unblocked, and access channels 4 and 5 are blocked. Thus, within the first 3-minutes time period, the number of blocked access classes is maintained constant, but a rotation among the affected access classes is made so that an access class is blocked for a portion of the time period only.

At the end of the first 3-minutes time period, the network load level is checked again and, in the example shown, is found to still exceed the first load threshold value. Therefore, at the beginning of the second 3-minutes time period, the number of barred access classes is increased by 2. At the same time, a rotation among the affected access classes is made, resulting in an unblocking of the formerly blocked access classes 4 and 5 and in a blocking of access classes 6, 7, 8 and 9. After another 1-minute time interval, a rotation among the access classes is effected, resulting in an unblocking of access classes 6, 7, 8 and 9 and a blocking of access classes 0, 1, 2 and 3.

At the end of another 1-minute time interval, the end of the predetermined 3-minutes time period is reached, so that the load level of the channel is checked and evaluated again. As in the instant example it turns out that the load level has dropped below the first threshold value, the number of barred access classes is decreased by the predetermined number, i.e. by 2. At the same time, a rotation of the affected access classes is performed, so that access classes 4 to 7 blocked before are now unblocked, and access classes 8 and 9 blocked. A rotation of the affected access classes is effected after another two time intervals of one minute each, which is not shown in the drawing, and in case that upon expiry of the respective 3-minutes time period the detected load level is below the first threshold value, the blocking of access classes is terminated and the 3-minutes timer stopped.

As already stated, use of two different network load threshold values to be compared with the current load level is not imperative. It may be sufficient to make use of one threshold value only, so that the number of barred access classes will be increased whenever the actual congestion of the cell exceeds said threshold value, and is decreased as long as said threshold value is not surpassed. The aim of the invention may be attained with this simplified solution as well, however, the number of barred access classes will be changed somewhat earlier as in case of the utilisation of a hysteresis defined by two distinct threshold values.

In the invention, the number of access classes which is newly affected at a specific time is fixed. In the embodiment explained before, this number of access classes is 2. Thus, each time a control of the number of barred classes is made, the number of classes is increased or decreased by 2, dependent on whether the detected congestion level is above or below the applicable threshold value, i.e. in the exemplified embodiment the first predetermined threshold value. Of course, the number of access classes affected may be different. Concerning the rotation of classes within a time period, the number of rotated classes depends on the number of barred classes. It should be as large as possible to enable a distribution of access time to the individual mobile subscribers which is as equal as possible.

The load of the network, i.e. of the cell, is determined in the following manner. A plurality of channels are at the disposition of the subscribers within a cell. The base station is monitoring the busy condition of all channels. In case that a predetermined maximum number of channels is busy at a time, congestion is judged. Said predetermined number therefore corresponds to the predetermined load threshold value. Thus, in an embodiment in which two different threshold values are used, two different predetermined numbers of channels are defined which are used for the comparison with the current busy status.

Instead of evaluating the number of busy channels, the load of the cell may be determined on the basis of free channels remaining or on the number of queued requests, depending on the customer choice.

## Claims

1. A method of controlling the access to a public land mobile network comprising a base station and a plurality of mobile subscriber stations,
wherein the mobile subscriber stations are each assigned at least one of a predetermined number of access classes, respective information of which is memorised in the mobile subscriber station, and the base station is adapted to broadcast a signalisation comprising an indication of at least one access class, the respective mobile subscriber station to which said at least one indicated access class is assigned being barred from access to the network upon receipt of the signalisation, wherein the load of traffic in the network is checked by the base station in regular time intervals and congestion of the network is determined by the base station if a predetermined load threshold value of the traffic is surpassed, and wherein upon determination of congestion the base station
a) issues a broadcast signalisation comprising an indication of a predetermined number of individually specified access classes, thereby barring all mobile subscriber stations assigned to the access classes specified by the signalisation from access to the network,
b) starts a timer counting a predetermined time period, after the expiry of which,
c) the base station checks the load of traffic in the network again and compares same with said predetermined load threshold value, and
d) upon determination of congestion still existing in the network broadcasts a signalisation including an increased number of access classes, whereas upon determination of the load having dropped below the predetermined load threshold value broadcasts a signalisation in which the number of specified access classes is decreased by a predetermined number,
wherein at each broadcast the timer is restarted, and the broadcast is terminated upon decrease to zero of the number of specified access classes, and
wherein each predetermined time period counted by the timer is divided in a plurality of time sub-intervals, and at the expiry of each sub-interval a signalisation is broadcast by the base station in which the specification of the access classes comprised therein is changed on a rotating base.

2. The method as said forth in claim 1, wherein the number of access classes which are affected at the beginning of one of the predetermined time periods in addition to those affected before is fixed.

3. The method as said forth in claim 1, wherein the number of access classes which at the beginning of one the predetermined time periods are discarded from being affected is fixed.

4. The method as said forth in one of claims 1 to 3, wherein the change of specified access classes at the end of each sub-interval within the predetermined time periods affects all access classes formerly specified.

5. The method as said forth in claim 1, wherein a second load threshold value higher than the first load threshold value of traffic within the network is fixed, and the barring of access channels is initialised upon detection of said second load threshold value having been surpassed by the traffic in the network, all subsequent evaluations of the traffic load of the network being referred to the first load threshold value.

6. The method as said forth in claim 1 or 5, wherein the traffic load of the network is evaluated by counting the channels which are busy at a time and comparing the count with at least one predetermined number.

7. The method as set forth in claim 1 or 5, wherein the traffic load of the network is evaluated by counting the free channels remaining and comparing the count with at least one predetermined number.

8. The method as set forth in claim 1 or 5, wherein the traffic load of the network is evaluated dependent on the number of queued requests and comparing same with at least one predetermined number.
